# EUROPEAN PATENT SPECIFICATION

(11) **EP 2 753 005 B1**
(45) Date of publication and mention of the grant of the patent: **06.03.2019**
(21) Application number: 12827555.9
(22) Date of filing: 29.08.2012
(51) Int. Cl.: H04B 7/26, H04W 72/04, H04W 72/02

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 31.08.2011 CN 201110255903
(43) Date of publication of application: 09.07.2014
(73) Proprietor: China Academy of Telecommunications Technology, Haidian District Beijing 100191 (CN)
(72) Inventor: PAN, Xueming, Beijing 100191 (CN); SUN, Shaohui, Beijing 100191 (CN)
(74) Representative: Nony
(86) International application number: PCT/CN2012/080726
(87) International publication number: WO 2013/029545

(56) References cited:
- EP-A1- 1 677 443
- WO-A1-2010/082114
- WO-A1-2011/020314
- WO-A1-2011/044558
- WO-A1-2011/044558
- WO-A1-2011/130626
- WO-A2-2010/090497
- CN-A- 101 621 835
- CN-A- 102 307 060

## Description

### Field

The present invention relates to the field of wireless communication technologies and particularly to a data communication method and apparatus.

### Background

General duplex modes adopted for a cellular system include a Time Division Duplex (TDD) mode and a Frequency Division Duplex (FDD) mode. In the TDD mode, the same operating band is used for both uplink and downlink, uplink and downlink signals are transmitted at different time, and there is a Guard Period (GP) between uplink and downlink; and in the FDD mode, different operating bands are used for uplink and downlink, uplink and downlink signals may be transmitted over different frequency carriers at the same time, and there is a Guard Band (GB) between uplink and downlink.

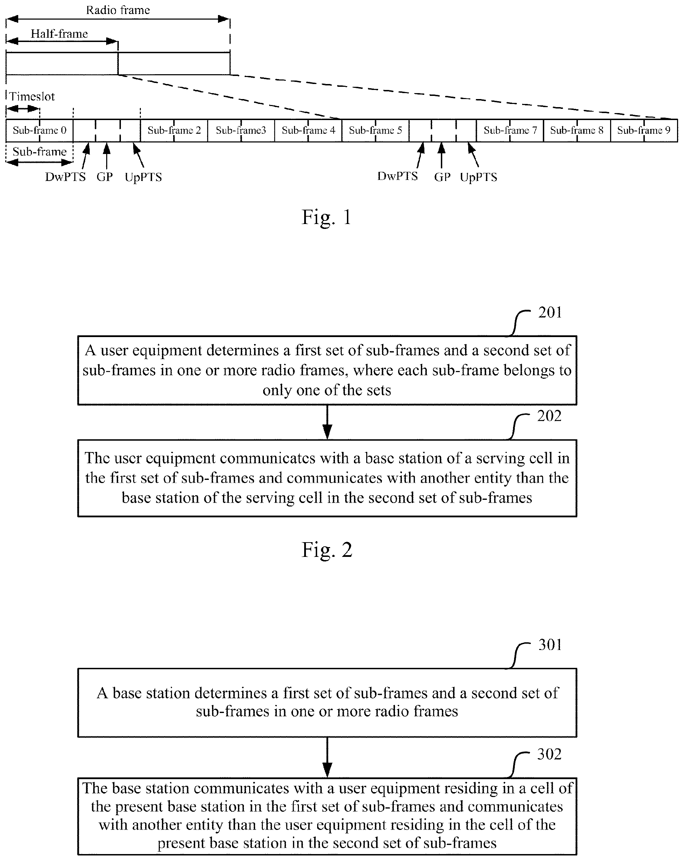

There is somewhat complicated frame structure of a Long Term Evolution (LTE) TDD system as illustrated in Fig. 1 where a radio frame has a length of 10 ms and includes two types of sub-frames which are special sub-frames and normal sub-frames, totaling to 10 sub-frames, each of which is 1 ms. The special sub-frames include three sub-frames which are a Downlink Pilot Slot (DwPTS) for transmission of a Primary Synchronization Signal (PSS), a Physical Downlink Control Channel (PDCCH), a Physical Hybrid Automatic Repeat Request (HARQ) Indication Channel (PHICH), a Physical Control Format Indication Channel (PCFICH), a Physical Downlink Shared Channel (PDSCH), etc.; a GP as a guard period between the downlink and the uplink; and an Uplink Pilot Slot (UpPTS) for transmission of a Sounding Reference Signal (SRS), a Physical Random Access Channel (PRACH), etc. The normal sub-frames include uplink sub-frames and downlink sub-frames for transmission of uplink/downlink control channels, service data, etc . Particularly in one radio frame, two special sub-frames (located at the sub-frames 1 and 6) or one special sub-frame (located at the sub-frame 1) may be configured. The sub-frame 0 and the sub-frame 5 as well as the DwPTS among the special sub-frames are always used for downlink transmission, the sub-frame 2 and the UpPTS among the special sub-frames are always used for uplink transmission, and the other sub-frames may be configured for uplink or downlink transmission as needed.

In the existing system, a user equipment which is not in a Discontinuous Reception (DRX) status needs to detect in each downlink sub-frame a downlink signal transmitted from a base station and transmits a signal to the base station in a corresponding uplink sub-frame as scheduled by the base station. In TDD, the allocation proportion of downlink sub-frames and uplink sub-frames in a radio frame and their corresponding locations are notified by the base station in a system broadcast, and all the user equipments in a cell operate in an uplink/downlink sub-frame allocation scheme (as depicted in Table 1) indicated by the broadcast. In the deployment of the existing TDD network, the same uplink/downlink sub-frame allocation scheme has to be adopted for adjacent cells to avoid interference between one base station and another base station or between one user equipment and another user equipment.

| Configuration No. | Switching Periodicity | Sub-frame No. | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

The existing radio frame structure is only applicable to transmission and reception of a signal between a user equipment and a base station and can not well support transmission and reception of a signal other than between a user equipment and a base station, for example, a direct communication service between one user equipment and another user equipment, direct communication between one base station and another base station via an air interface, etc.

In summary, the existing radio frame structure is only applicable to transmission and reception of a signal between a user equipment and a base station and cannot support transmission and reception of a signal between other entities than a user equipment and a base station in communication.

WO 2011/044558 A1 discloses subframe staggering for relay communication, which further discloses that a first relay may determine its access subframes and backhaul subframes, which may correspond to different non-overlapping subsets of subframes of the first relay; the first relay may communicate with at least one UE on the access link during the access subframes; the first relay may communicate with a base station on the backhaul link during the backhaul subframes; the subframes of the first relay may be offset (e.g., by an integer number of subframes) from the subframes of a second relay communicating with the base station.

WO 2010/082114 A1 discloses that: according to one general aspect, a method may include communicating, by a first apparatus, with at least a second apparatus via a device-to-device communication link. In various embodiments, the method may also include receiving resource allocations, from a base station. In some embodiments, the method may include determining, based at least partly on the received resource allocations, which resources are allocated to at least the second apparatus for communication with the base station. In various embodiments, the method may include based at least partly upon the resource allocations, determining when to perform direct device-to-device communication, by the first apparatus, with the second apparatus.

WO 2010/130626 A1 discloses that techniques for supporting peer-to-peer (P2P) communication and wide area network (WAN) communication are disclosed. In one aspect, P2P communication may be supported on an uplink spectrum. A user equipment (UE) may communicate (i) with a base station on both a downlink spectrum and an uplink spectrum for WAN communication and (ii) with another UE on only the uplink spectrum for P2P communication. In another aspect, P2P communication may be supported by time division multiplexing the downlink and uplink (or transmit and receive links) for two UEs. In yet another aspect, WAN communication and P2P communication may be time division multiplexed, so that both can be concurrently supported by a UE. In yet another aspect, transmission gaps may be provided between WAN transmissions and P2P transmissions in order to avoid interference between these transmissions.

### Summary

The invention is defined by the appended claims. Embodiments of the invention provide a data communication method and apparatus so as to be applicable to transmission and reception of a signal between a user equipment and a base station and also support transmission and reception of a signal between other entities than a user equipment and a base station in communication.

An aspect of the invention provides a signal communication method including:
a user equipment determining a first set of sub-frames and a second set of sub-frames in one or more radio frames, wherein each sub-frame belongs to only one of the sets; and
the user equipment communicating with a base station of a serving cell in the first set of sub-frames and communicating with another entity than the base station of the serving cell in the second set of sub-frames,
   wherein the user equipment communicates different data with the base station of the serving cell and with other entity than the base station of the serving cell;
   wherein the user equipment determining the first set of sub-frames and the second set of sub-frames in one or more radio frames comprises:
      the user equipment determining uplink sub-frames and downlink sub-frames in the first set and determining sub-frames in which the user equipment is configured as transmission status and sub-frames in which the user equipment is configured as reception status in the second set according to the received configuration information from a network side;
      wherein the determined second set of sub-frames are configured by the base station of the serving cell as uplink sub-frames for a non-evolved user equipment; or the second set of sub-frames are configured by the base station of the serving cell as sub-frames in which the non-evolved user equipment, wherein the non-evolved user equipment is a user equipment which is not an evolved TDD user equipment.

An aspect of the invention provides a signal communication method including:
a base station determining a first set of sub-frames and a second set of sub-frames in one or more radio frames; and
the base station communicating with a user equipment residing in a cell of the present base station in the first set of sub-frames and communicating with another entity than the user equipment residing in the cell of the present base station in the second set of sub-frames,
wherein the base station communicates different data with the user equipment residing in the cell of the present base station and with the other entity than the user equipment residing in the cell of the present base station;
wherein the base station determining a first set of sub-frames and a second set of sub-frames in one or more radio frames comprises:
   the base station determining the first set of sub-frames and the second set of sub-frames in one or more radio frames according to received configuration information from a network side; or
   the base station determining the first set of sub-frames and the second set of sub-frames according to a service demand; the base station determining a transmission direction of the first set of sub-frames according to an uplink/downlink configuration proportion and determining a transmission direction of the second set of sub-frames according to a service to be communicated; and the base station generating configuration information from the determined first set and second set and transmitting the configuration information in a system broadcast or user equipment specific signaling;
   the base station configuring a non-evolved user equipment with uplink sub-frames in the determined second set of sub-frames, or the base station scheduling a non-evolved user equipment to transmit a signal in the second set of sub-frames, wherein the non-evolved user equipment is a user equipment which is not an evolved TDD user equipment.

Sub-frames in one or more radio frames are divided into two sets to be used differently to thereby be applicable to transmission and reception of a signal between a user equipment and a base station and also support transmission and reception of a signal between other entities than a user equipment and a base station in communication. The resource utilization ratio of the system and the system performance is further improved.

### Brief Description of the Drawings

Fig. 1 is a schematic structural diagram of a TD-LTE system frame;
Fig. 2 is a schematic flow chart of a method of a user equipment transmitting data according to an embodiment of the invention;
Fig. 3 is a schematic flow chart of a method of a base station transmitting data according to an embodiment of the invention;
Fig. 4 is a schematic diagram of first TDD system communication according to an embodiment of the invention;
Fig. 5 is a schematic diagram of second TDD system communication according to an embodiment of the invention;
Fig. 6 is a schematic structural diagram of a user equipment according to an embodiment of the invention; and
Fig. 7 is a schematic structural diagram of a base station according to an embodiment of the invention.

### Detailed Description

In view of such a problem in the prior art that an existing radio frame structure is only applicable to transmission and reception of a signal between a user equipment and a base station and can not support transmission and reception of a signal between other entities than a user equipment and a base station, in embodiments of the invention, sub-frames in one or more radio frames are divided into a first set and a second set, where the first set of sub-frames are used for communication between a base station and a user equipment, and the second set of sub-frames are used for another use of communication, for example, communication between user equipments, communication between base stations, etc. Sub-frames in one or more radio frames are divided into two sets to be used differently to thereby be applicable to transmission and reception of a signal between a user equipment and a base station and also support transmission and reception of a signal between other entities than a user equipment and a base station in communication, for example, transmission and reception of a signal between a user equipment and another entity than a base station, transmission and reception of a signal between a base station and another entity than a user equipment.

Particularly the solution according to the embodiments of the invention is applicable to an FDD system and a TDD system.

The embodiments of the invention will be further described below in details with reference to the drawings.

As illustrated in Fig. 2, a method of a user equipment transmitting data according to an embodiment of the invention includes the following steps.

Step 201. A user equipment determines a first set of sub-frames and a second set of sub-frames in one or more radio frames; and
Step 202. The user equipment communicates with a base station of a serving cell in the first set of sub-frames and communicates with another entity than the base station of the serving cell in the second set of sub-frames.

Particularly the other entity than the base station of the serving cell includes another user equipment and another base station than the base station of the serving cell.

Sub-frames in one or more radio frames are divided into two sets to be used differently to thereby be applicable to transmission and reception of a signal between a user equipment and a base station and also support transmission and reception of a signal between a user equipment and another entity than a base station, for example, transmission and reception of a signal between one user equipment and another user equipment.

Preferably in an implementation, a specific period of time may be preset, for example, 5 radio frames, and then the user equipment determines a first set of sub-frames and a second set of sub-frames in the 5 radio frames and communicates in subsequent radio frames as in the prior art.

The specific period of time may be preset from simulation or as needed and preferably may be specified in a protocol or notified by the network side.

In communication, the user equipment may communicate respectively with the base station of the serving cell and with the other entity than the base station of the serving cell in the first set and the second set of sub-frames in the same radio frame as needed, for example, for the sub-frame 3 and the sub-frame 4 in the same radio frame, the sub-frame 3 belongs to the first set, and the sub-frame 4 belongs to the second set, and then the user equipment may communication with the base station of the serving cell in the sub-frame 3 and communication with the other entity than the base station of the serving cell in the sub-frame 4; and

The user equipment may communicate respectively with the base station of the serving cell and with the other entity than the base station of the serving cell in the first set and the second set of sub-frames in different radio frames as needed, for example, for the sub-frame 3 and the sub-frame 4 in different radio frames, the sub-frame 3 belongs to the first set, and the sub-frame 4 belongs to the second set, and then the user equipment may communication with the base station of the serving cell in the sub-frame 3 and communication with the other entity than the base station of the serving cell in the sub-frame 4.

In communication, the user equipment may communicate the same or different data with the base station of the serving cell and with the other entity than the base station of the serving cell.

For example, the user equipment may forward the data communicated with the base station of the serving cell to another user equipment or another base station as needed for a service. Particularly the user equipment forwards the data communicated with the base station of the serving cell in the first set of sub-frames to the other entity than the base station of the serving cell in the second set of sub-frames.

In an implementation, a sub-frame may belong to both of the two sets; and preferably each sub-frame belongs to only one of the sets.

Particularly the user equipment according to the embodiment of the invention is an evolved user equipment, where the evolved user equipment refers to an evolved TDD user equipment and a user equipment supporting the function of the inventive solution, for example, a user equipment of the 3GPP LTE Rel-11 or a later release. The base station of the serving cell refers to a base station serving the serving cell of the user equipment.

In the step 201, the user equipment determines the first set of sub-frames and the second set of sub-frames in the radio frame(s) according to received configuration information from the network side.

Preferably the user equipment receives the configuration information in a system broadcast or user equipment specific signaling.

If the user equipment receives the configuration information in the user equipment specific signaling, then all or a part or none of configuration information corresponding to different user equipments is the same.

Particularly the first set of sub-frames include uplink sub-frames and downlink sub-frames respectively used for transmission and reception of uplink and downlink signals between the user equipment and the network side. In a TDD system, downlink sub-frames and uplink sub-frames are located over the same carrier, and a sub-frame direction division scheme may be notified by the network side to the user equipment, for example, in a system broadcast, user equipment specific signaling, etc. If it is notified in the user equipment specific signaling, then the different user equipments may be configured with different sub-frame direction division schemes. Particularly in the step 201, the user equipment determines the uplink sub-frames and the downlink sub-frames in the first set according to the received configuration information from the network side.

Preferably in the step 202, the user equipment transmits a signal in the uplink sub-frames in the first set and receives a signal in the downlink sub-frames in the first set.

Particularly the second set of sub-frames include sub-frames in a transmission status and sub-frames in a reception status. In the TDD system, the sub-frames in the transmission status and the sub-frames in the reception status are located over the same carrier, and a sub-frame status division scheme may be notified by the network side to the user equipment, for example, in a system broadcast, user equipment specific signaling, etc. If it is notified in the user equipment specific signaling, then different user equipments may be configured with different sub-frame status division schemes. Particularly in the step 201, the user equipment determines the sub-frames in the transmission status and the sub-frames in the reception status in the second set according to the received configuration information from the network side.

Preferably in the step 202, the user equipment transmits a signal in the sub-frames in the transmission status in the second set and receives a signal in the sub-frames in the reception status in the second set.

Particularly the user equipment transmits a signal to another user equipment in the sub-frames in the transmission status in the second set and does not transmit a signal to the base station in sub-frames in the transmission status; and receives a signal from the another user equipment in the sub-frames in the reception status in the second set and does not receive a signal from the base station in sub-frames in the reception status.

For example, when the user equipment communicates directly with another user equipment, the user equipment may neither receive a signal from the base station nor transmit a signal to the base station in these sub-frames, and the user equipment is configured in a transmission or reception status according to signaling of the base station, where different user equipments may be configured in the same or different statuses in the same one sub-frame. In the transmission status, the user equipment transmits control signaling, a data signal, corresponding channel measurement and demodulation reference signals, etc., for direct communication between the user equipments, and a reference signal, a synchronization signal, etc., used for the other user equipment to capture the present user equipment; and in the reception status, the user equipment may detect a synchronization signal or a reference signal transmitted from one or more other user equipments to discover the presence of the corresponding user equipment(s) and to set up synchronization with the corresponding user equipment(s). Moreover control signaling, a data signal, corresponding measurement and demodulation reference signals, etc., transmitted from the corresponding user equipment(s) may be further received.

Preferably the user equipment may communication in the second set of sub-frames for another use (for example, communication between the user equipments), possibly in a full sub-frame, for example, a temporal length of 1ms and a system bandwidth in the frequency domain in the LTE system; or a part of a sub-frame, for example, a part of the temporal length in a full sub-frame (for example, a part of Orthogonal Frequency Division Multiplexing (OFDM) symbols in the LTE) and a part of the width in the frequency domain (for example, a part of Resource Blocks (RBs) in the LTE).

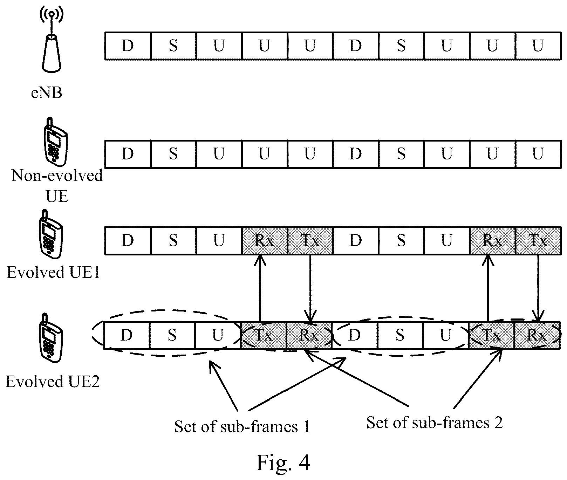

As illustrated in Fig. 3, a method of a base station transmitting data according to an embodiment of the invention includes the following steps.

Step 301. A base station determines a first set of sub-frames and a second set of sub-frames in one or more radio frames; and

Step 302. The base station communicates with a user equipment residing in a cell of the present base station in the first set of sub-frames and communicates with another entity than the user equipment residing in the cell of the present base station in the second set of sub-frames.

The other entity than the user equipment residing in the cell of the present base station includes another base station and a user equipment which does not resides in the cell of the present base station.

Sub-frames in one or more radio frames are divided into two sets to be used differently to thereby be applicable to transmission and reception of a signal between a user equipment and a base station and also support transmission and reception of a signal between the base station and another entity than the user equipment, for example, transmission and reception of a signal between one base station and another base station.

Preferably in an implementation, a specific period of time may be preset, for example, 5 radio frames, and then the base station determines a first set of sub-frames and a second set of sub-frames in the 5 radio frames and communicates in subsequent frames as in the prior art.

The specific period of time may be preset from simulation or as needed and preferably may be specified in a protocol or notified by the network side (e.g., a higher layer).

In communication, the base station may communicate respectively with the user equipment residing in the cell of the present base station and with the other entity than the user equipment residing in the cell of the present base station in the first set and the second set of sub-frames in the same radio frame as needed, for example, for the sub-frame 3 and the sub-frame 4 in the same radio frame, the sub-frame 3 belongs to the first set, and the sub-frame 4 belongs to the second set, and then the base station may communication with the user equipment residing in the cell of the present base station in the sub-frame 3 and communication with the other entity than the user equipment residing in the cell of the present base station in the sub-frame 4; and

The base station may communicate respectively with the user equipment residing in the cell of the present base station and with the other entity than the user equipment residing in the cell of the present base station in the first set and the second set of sub-frames in different radio frames as needed, for example, for the sub-frame 3 and the sub-frame 4 in different radio frames, the sub-frame 3 belongs to the first set, and the sub-frame 4 belongs to the second set, and then the base station may communication with user equipment residing in the cell of the present base station in the sub-frame 3 and communication with the other entity than user equipment residing in the cell of the present base station in the sub-frame 4.

In communication, the base station may communicate the same or different data with the user equipment residing in the cell of the present base station and with the other entity than the user equipment residing in the cell of the present base station.

For example, the base station may forward the data communicated with the user equipment residing in the cell of the present base station to another user equipment or another base station as needed for a service. Particularly the base station forwards the data communicated with the user equipment residing in the cell of the present base station in the first set of sub-frames to the other entity than the user equipment residing in the cell of the present base station in the second set of sub-frames.

In an implementation, a sub-frame may belong to both of the two sets; and preferably each sub-frame belongs to only one of the sets.

Particularly the user equipment residing in the cell of the present base station refers to a user equipment in a cell managed by the base station.

In the step 302, the base station communicates with the user equipment residing in the cell of the present base station in the first set of sub-frames, where the user equipment residing in the cell of the present base station here includes an evolved user equipment and a non-evolved user equipment.

Particularly the evolved user equipment is an evolved TDD user equipment and a user equipment supporting the function of the inventive solution, for example, a user equipment of the 3GPP LTE Rel-11 or a later release.

Preferably in the step 302, the base station communicates with the non-evolved user equipment residing in the cell of the present base station in the second set of sub-frames.

In an implementation, the base station may determine the first set of sub-frames and the second set of sub-frames in the radio frame(s) according to configuration information of the network side or may determine by itself the first set of sub-frames and the second set of sub-frames in the radio frame(s).

If the base station determines the first set of sub-frames and the second set of sub-frames in the radio frame(s) according to the configuration information of the network side, then in the step 301, the base station determines the first set of sub-frames and the second set of sub-frames in the radio frame(s) according to the received configuration information from the network side (for example, a higher layer).

Particularly all or a part or none of configuration information corresponding to different base stations is the same.

If the base station determines by itself the first set of sub-frames and the second set of sub-frames in the radio frame(s), then the base station determines the first set of sub-frames and the second set of sub-frames according to a service demand; and determines a transmission direction of the first set of sub-frames according to an uplink/downlink configuration proportion and determines a transmission direction of the second set of sub-frames according to a service to be communicated.

For example, if there are a larger number of D2D services to be performed, then some more sub-frames may be configured in the second set; and if there are a larger number of services between the base station and the user equipment, then some more sub-frames may be configured in the first set.

For example, if the uplink/downlink configuration proportion is 1:3, then the sub-frames in the first set may be configured at exactly or approximately 1:3.

For example, in a D2D service, if there is an almost equal amount of data transmitted between user equipments A and B, then the sub-frames in the transmission status and in the reception status may be configured in the second set at an almost equal proportion; and if there is a larger amount transmitted from the user equipment A to the user equipment B, then the user equipment A may be configured with a larger number of sub-frames in the transmission status and the user equipment B may be configured with a larger number of sub-frames in the reception status in the second set.

The same applies to other scenarios than this scenario, and a repeated description thereof will be omitted here.

In an implementation, if the first set of sub-frames and the second set of sub-frames are configured by the network side, then the configuration mode adopted by the network side may be the same as that adopted by the base station as described above.

Preferably the base station generates configuration information from the determined first set and second set and transmits the configuration information in a system broadcast or user equipment specific signaling.

If the base station transmits the configuration information in the user equipment specific signaling, then all or a part or none of configuration information corresponding to different user equipments is the same.

Particularly the first set of sub-frames include uplink sub-frames and downlink sub-frames respectively used for transmission and reception of uplink and downlink signals between the base station and the user equipment.

Particularly the base station receives a signal in the uplink sub-frames in the first set and transmits a signal in the downlink sub-frames in the first set.

Particularly the second set of sub-frames include sub-frames in a transmission status and sub-frames in a reception status. Particularly the base station transmits a signal in the sub-frames in the transmission status in the second set and receives a signal in the sub-frames in the reception status in the second set.

If the base station communicates with another base station, then the base station transmits a signal to the other base station in the sub-frames in the transmission status in the second set and does not transmit a signal to the user equipment in the sub-frames in the transmission status; and receives a signal from the other base station in the sub-frames in the reception status in the second set and does not receive a signal from the user equipment in sub-frames in the reception status.

For example, when the base station communicates directly with another base station, the base station may neither receive a signal transmitted from the user equipment nor transmit a signal to the user equipment in these sub-frames, and the base station is configured by the network side in a transmission or reception status, where different base stations may be configured in the same or different statuses in the same sub-frame. In the transmission status, the base station transmits control signaling, a data signal, corresponding measurement and demodulation reference signals, etc., for direct communication between the base stations, and a reference signal, a synchronization signal, etc., used for the other base station to capture the present base station; and in the reception status, the base station may detect a synchronization signal or a reference signal transmitted from one or more other base stations to set up synchronization with the corresponding base station(s). Moreover control signaling, a data signal, corresponding measurement and demodulation reference signals, etc., transmitted from the corresponding base station(s) may be further received.

Preferably the base station may further configure a non-evolved user equipment with uplink sub-frames in the determined second set of sub-frames.

Preferably the base station may further schedule the non-evolved user equipment not to transmit a signal in the second set of sub-frames.

Transmission of a signal by the user equipment in the second set will be described below by way of an example.

As illustrated in Fig. 4, in the TDD system, evolved user equipments 1 and 2 are configured by a base station (i.e., an eNB) respectively with two sets, which are a first set including sub-frames {0, 1, 2, 5, 6, 7} in a radio frame and a second set including sub-frames {3, 4, 8, 9} in the radio frame. For the evolved user equipment 1, sub-frames in a reception status are the sub-frames {3, 8} in the second set, and sub-frames in a transmission status are the sub-frames {4, 9} in the second set; and for the evolved user equipment 2, sub-frames in a reception status are the sub-frames {4, 9} in the second set, and sub-frames in a transmission status are the sub-frames {3, 8} in the second set.

In the sub-frames in the reception status, the evolved user equipments 1 and 2 do not receive and process a signal from the base station but obtain synchronization with another evolved user equipment, receive control signaling, data and a reference signal from the other evolved user equipment, etc; and

In the sub-frames in the transmission status, the evolved user equipments 1 and 2 do not transmit a signal to the base station but transmit a synchronization signal, control signaling, a data signal, a reference signal, etc., to the user equipment.

Transmission of a signal by the base station in the second set will be described below by way of a particular example.

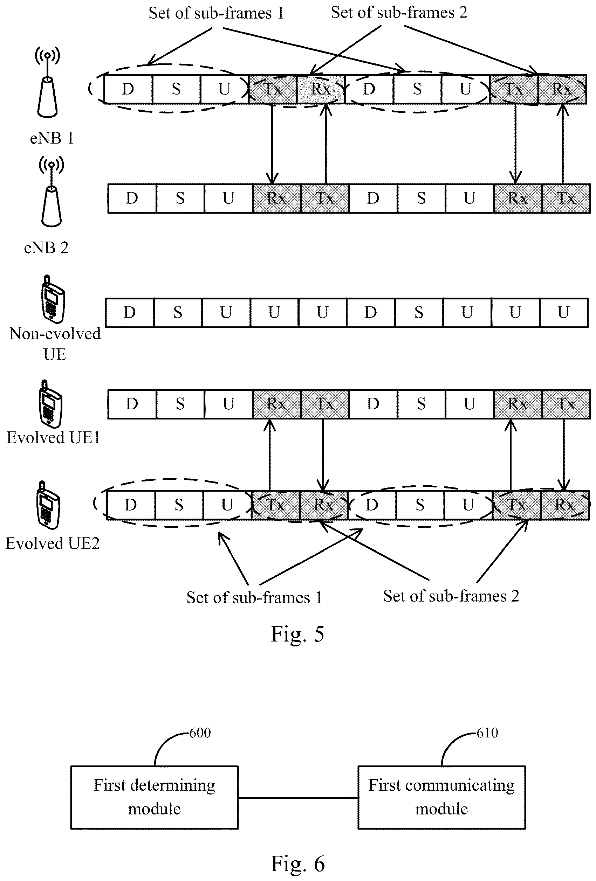

As illustrated in Fig. 5, an evolved base station 1 and an evolved base station 2 are configured by the network side with two sets of sub-frames, which are a first set including sub-frames {0, 1, 2, 5, 6, 7} in a radio frame and a second set including sub-frames {3, 4, 8, 9} in the radio frame. For the evolved base station 1, sub-frames in a reception status are the sub-frames {3, 8} in the second set, and sub-frames in a transmission status are the sub-frames {4, 9} in the second set; and for the evolved base station 2, sub-frames in a reception status are the sub-frames {4, 9} in the second set, and sub-frames in a transmission status are the sub-frames {3, 8} in the second set.

In the sub-frames in the reception status, the evolved base station 1 and the base station 2 do not transmit a signal to the user equipment but transmit a synchronization signal, control signaling, a data signal, a reference signal, etc., to another base station; and

In the sub-frames in the transmission status, the evolved base station 1 and the base station 2 do not receive a signal transmitted from the user equipment but receive and process a synchronization signal, control signaling, a data signal, a reference signal, etc., transmitted from the other base station.

Moreover in the second set of sub-frames, the base station still can configure evolved user equipments to communicate directly with each other, particularly with reference to Fig. 4.

For a non-evolved user equipment, it can transmit uplink and downlink signals with the base station as in the prior art, and in the second set of sub-frames with which an evolved user equipment is configured, the base station configures uplink transmission for the non-evolved user equipment and/or does not schedule the non-evolved user equipment to transmit a signal in the second set of sub-frames.

Based upon the same inventive idea, an embodiment of the invention further provides a user equipment, and since the user equipment addresses the problem under a similar principle to the method of a user equipment transmitting data according to embodiments of the invention, reference can be made to the implementation of the method for an implementation of the user equipment, so a repeated description thereof will be omitted here.

As illustrated in Fig. 6, a user equipment according to an embodiment of the invention includes a first determining module 600 and a first communicating module 610.

The first determining module 600 is configured to determine a first set of sub-frames and a second set of sub-frames in one or more radio frames, where each sub-frame belongs to only one of the sets; and

The first communicating module 610 is configured to communicate with a base station of a serving cell in the first set of sub-frames and to communicate with another entity than the base station of the serving cell in the second set of sub-frames.

In an implementation, a sub-frame may belong to both of the two sets; and preferably each sub-frame belongs to only one of the sets.

Preferably the first determining module 600 determines the first set of sub-frames and the second set of sub-frames in the radio frame(s) according to received configuration information from the network side.

Preferably the first determining module 600 receives the configuration information in a system broadcast or user equipment specific signaling.

Preferably the first determining module 600 determines uplink sub-frames and downlink sub-frames in the first set and determines sub-frames in a transmission status and sub-frames in a reception status in the second set according to the received configuration information from the network side.

Preferably the first communicating module 610 transmits a signal in the uplink sub-frames in the first set and receives a signal in the downlink sub-frames in the first set; and transmits a signal in the sub-frames in the transmission status in the second set and receives a signal in the sub-frames in the reception status in the second set.

Preferably the first communicating module 610 transmits a signal to another user equipment in the sub-frames in the transmission status in the second set and does not transmit a signal to the base station in sub-frames in the transmission status; and receives a signal from the other user equipment in the sub-frames in the reception status in the second set and does not receive a signal from the base station in sub-frames in the reception status.

Preferably the first communicating module 610 forwards data communicated with the base station of the serving cell in the first set of sub-frames to the other entity than the base station of the serving cell in the second set of sub-frames.

Based upon the same inventive idea, an embodiment of the invention further provides a base station, and since the base station addresses the problem under a similar principle to the method of a base station transmitting data according to embodiments of the invention, reference can be made to the implementation of the method for an implementation of the base station, so a repeated description thereof will be omitted here.

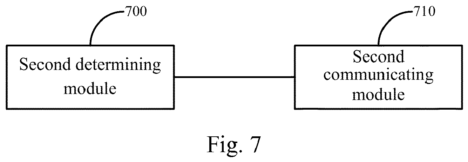

As illustrated in Fig. 7, a base station according to an embodiment of the invention includes: a second determining module 700 and a second communicating module 710.

The second determining module 700 is configured to determine a first set of sub-frames and a second set of sub-frames in one or more radio frames; and

The second communicating module 710 is configured to communicate with a user equipment residing in a cell of the present base station in the first set of sub-frames and to communicate with another entity than the user equipment residing in the cell of the present base station in the second set of sub-frames.

Preferably the second communicating module 710 communicates with a non-evolved user equipment residing in the cell of the present base station in the second set of sub-frames.

In an implementation, a sub-frame may belong to both of the two sets; and preferably each sub-frame belongs to only one of the sets.

The second communicating module 710 communicates with the user equipment residing in the cell of the present base station in the first set of sub-frames, where the user equipment residing in the cell of the present base station includes an evolved user equipment and a non-evolved user equipment.

Preferably the second determining module 700 determines the first set of sub-frames and the second set of sub-frames in the radio frame(s) according to received configuration information from the network side.

Preferably the second determining module 700 determines the first set of sub-frames and the second set of sub-frames according to a service demand; determines a transmission direction of the first set of sub-frames according to an uplink/downlink configuration proportion and determines a transmission direction of the second set of sub-frames according to a service to be transmitted; and generates configuration information from the determined first set and second set and transmits the configuration information in a system broadcast or user equipment specific signaling.

Preferably the second communicating module 710 receives a signal in the uplink sub-frames in the first set and transmits a signal in the downlink sub-frames in the first set; and transmits a signal in the sub-frames in the transmission status in the second set and receives a signal in the sub-frames in the reception status in the second set.

Preferably the second communicating module 710 transmits a signal to another base station in the sub-frames in the transmission status in the second set and does not transmit a signal to the user equipment in sub-frames in the transmission status; and receives a signal from the other base station in the sub-frames in the reception status in the second set and does not receive a signal from the user equipment in sub-frames in the reception status.

Preferably the second communicating module 710 forwards data communicated with the user equipment residing in the cell of the present base station in the first set of sub-frames to the other entity than the user equipment residing in the cell of the present base station in the second set of sub-frames.

Preferably the second determining module 700 configures a non-evolved user equipment with uplink sub-frames in the determined second set of sub-frames.

Preferably the second determining module 700 does not schedule a non-evolved user equipment to transmit a signal in the second set of sub-frames.

Sub-frames in one or more radio frames are divided into two sets to be used differently to thereby be applicable to transmission and reception of a signal between a user equipment and a base station and also support transmission and reception of a signal between other entities than a user equipment and a base station in communication, for example, transmission and reception of a signal between a user equipment and another entity than a base station, transmission and reception of a signal between a base station and another entity than a user equipment, etc.; and to further improve the resource utilization ratio of the system and the system performance.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the invention without departing from the scope of the invention. Thus the invention is also intended to encompass these modifications and variations thereto so long as the modifications and variations come into the scope of the claims appended to the invention and their equivalents.

## Claims

1. A signal communication method comprising:
a user equipment determining (201) a first set of sub-frames and a second set of sub-frames in one or more radio frames; and
the user equipment communicating (202) with a base station of a serving cell in the first set of sub-frames and communicating with another entity than the base station of the serving cell in the second set of sub-frames,
wherein:
wherein the user equipment is an evolved TDD user equipment;
the user equipment communicates different data with the base station of the serving cell and with other entity than the base station of the serving cell;
the user equipment determining (201) the first set of sub-frames and the second set of sub-frames in one or more radio frames comprises:
the user equipment determining uplink sub-frames and downlink sub-frames in the first set and determining sub-frames in which the user equipment is configured as transmission status and sub-frames in which the user equipment is configured as reception status in the second set according to received configuration information from a network side;
wherein the determined second set of sub-frames are configured by the base station of the serving cell as uplink sub-frames for a non-evolved user equipment; or the second set of sub-frames are configured by the base station of the serving cell as sub-frames in which the non-evolved user equipment cannot transmit a signal, wherein the non-evolved user equipment is a user equipment which is not an evolved TDD user equipment.

2. The method of claim 1, wherein each sub-frame belongs to one of the first set and the second set.

3. The method of claim 1, wherein the user equipment communicating with the base station comprises:
the user equipment transmitting a signal in the uplink sub-frames in the first set and receiving a signal in the downlink sub-frames in the first set; and
the user equipment communicating with the another entity than the base station of the serving cell comprises:
the user equipment transmitting a signal in the sub-frames in which the user equipment is configured as transmission status in the second set and receiving a signal in the sub-frames in which the user equipment is configured as reception status in the second set.

4. The method of claim 3, wherein the user equipment communicates with another user equipment; and
the user equipment communicating with the another entity than the base station of the serving cell comprises:
the user equipment transmitting a signal to the another user equipment in the sub-frames in which the user equipment is configured as transmission status in the second set and not transmitting a signal to the base station in the sub-frames in which the user equipment is configured as transmission status; and receiving a signal from the another user equipment in the sub-frames in which the user equipment is configured as reception status in the second set and not receiving a signal from the base station in the sub-frames in which the user equipment is configured as reception status.

5. A signal communication method comprising:
a base station determining (301) a first set of sub-frames and a second set of sub-frames in one or more radio frames; and
the base station communicating (302) with a user equipment residing in a cell of the base station in the first set of sub-frames and communicating with another entity than the user equipment residing in the cell of the base station in the second set of sub-frames,
wherein:
the user equipment residing in the cell of the base station is an evolved TDD user equipment;
the base station communicates different data with the user equipment residing in the cell of the base station and with the other entity than the user equipment residing in the cell of the base station;
the base station determining (301) a first set of sub-frames and a second set of sub-frames in one or more radio frames comprises:
the base station determining the first set of sub-frames and the second set of sub-frames in one or more radio frames according to received configuration information from a network side; or
the base station determining the first set of sub-frames and the second set of sub-frames according to a service demand; the base station determining a transmission direction of the first set of sub-frames according to an uplink/downlink configuration proportion and determining a transmission direction of the second set of sub-frames according to a service to be communicated; and the base station generating configuration information from the determined first set and second set and transmitting the configuration information in a system broadcast or user equipment specific signaling;
the base station configuring a non-evolved user equipment with uplink sub-frames in the determined second set of sub-frames, or the base station scheduling a non-evolved user equipment not to transmit a signal in the second set of sub-frames, wherein the non-evolved user equipment is a user equipment which is not an evolved TDD user equipment.

6. The method of claim 5, wherein each sub-frame belongs to one of the first set and the second set.

7. The method of claim 5, wherein the base station communicates with another base station; and
the base station communicating with the another entity than the user equipment residing in the cell of the base station comprises:
the base station transmitting a signal to the another base station in the sub-frames in which the base station is configured as transmission status in the second set and not transmitting a signal to the user equipment in the sub-frames in which the base station is configured as transmission status; and receiving a signal from the another base station in the sub-frames in which the base station is configured as reception status in the second set and not receiving a signal from the user equipment in the sub-frames in which the base station is configured as reception status.

8. The method of claim 5, wherein the base station communicating with the user equipment residing in the cell of the base station comprises:
the base station receiving a signal in uplink sub-frames in the first set and transmitting a signal in downlink sub-frames in the first set; and
the base station communicating with the another entity than the user equipment residing in the cell of the base station comprises:
the base station transmitting a signal in sub-frames in which the base station is configured as transmission status in the second set and receiving a signal in sub-frames in which the base station is configured as reception status in the second set.

## Patentansprüche

1. Signalkommunikationsverfahren, umfassend:
Bestimmen (201) durch ein Benutzergerät eines ersten Satzes von Unterrahmen und eines zweiten Satzes von Unterrahmen in einem oder mehreren Funkrahmen; und
Kommunizieren (202) durch das Benutzergerät mit einer Basisstation einer bedienenden Zelle in dem ersten Satz von Unterrahmen und Kommunizieren mit einer anderen Einheit als der Basisstation der bedienenden Zelle in dem zweiten Satz von Unterrahmen,
wobei:
wobei das Benutzergerät ein weiterentwickeltes TDD-Benutzergerät ist;
das Benutzergerät verschiedene Daten an die Basisstation der bedienenden Zelle und an eine anderen Einheit als die Basisstation der bedienenden Zelle kommuniziert;
das Bestimmen (201) durch das Benutzergerät des ersten Satzes von Unterrahmen und des zweiten Satzes von Unterrahmen in einem oder mehreren Funkrahmen umfasst:
Bestimmen durch das Benutzergeräts der Uplink-Unterrahmen und der Downlink-Unterrahmen in dem ersten Satz und das Bestimmen der Unterrahmen, in denen das Benutzergerät mit einem Übertragungsstatus konfiguriert ist, und der Unterrahmen, in denen das Benutzergerät mit einem Empfangsstatus in dem zweiten Satz gemäß der empfangenen Konfigurationsinformationen von einer Netzwerkseite konfiguriert ist;
wobei der bestimmte zweite Satz von Unterrahmen durch die Basisstation der bedienenden Zelle als Uplink-Unterrahmen für eine nicht weiterentwickeltes Benutzergerät konfiguriert wird; oder der zweite Satz von Unterrahmen von der Basisstation der bedienenden Zelle als Unterrahmen konfiguriert wird, in denen das nicht weiterentwickelte Benutzergerät kein Signal übertragen kann, wobei das nicht weiterentwickelte Benutzergerät ein Benutzergerät ist, das kein weiterentwickeltes TDD-Benutzergerät ist.

2. Verfahren nach Anspruch 1, wobei jeder Unterrahmen zu einem von dem ersten Satz und dem zweiten Satz gehört.

3. Verfahren nach Anspruch 1, wobei das Benutzergerät, das mit der Basisstation kommuniziert, umfasst:
Übertragen durch das Benutzergerät eines Signals in den Uplink-Unterrahmen in dem ersten Satz und Empfangen eines Signals in den Downlink-Unterrahmen in dem ersten Satz; und
das Kommunizieren durch das Benutzergerät mit der anderen Einheit als der Basisstation der bedienenden Zelle umfasst:
Übertragen durch das Benutzergerät eines Signals in den Unterrahmen, in denen das Benutzergerät mit einem Übertragungsstatus in dem zweiten Satz konfiguriert ist, und Empfangen eines Signals in den Unterrahmen, in denen das Benutzergerät mit einem Empfangsstatus in dem zweiten Satz konfiguriert ist.

4. Verfahren nach Anspruch 3, wobei das Benutzergerät mit einem anderen Benutzergerät kommuniziert; und
das Kommunizieren durch das Benutzergerät mit der anderen Einheit als der Basisstation der bedienenden Zelle umfasst:
Übertragen durch das Benutzergerät eines Signals an das andere Benutzergerät in den Unterrahmen, in denen das Benutzergerät mit einem Übertragungsstatus in dem zweiten Satz konfiguriert ist, und kein Übertragen eines Signals an die Basisstation in den Unterrahmen, in denen das Benutzergerät mit einem Übertragungsstatus konfiguriert ist; und Empfangen eines Signals von dem anderen Benutzergerät in den Unterrahmen, in denen das Benutzergerät mit einem Empfangsstatus in dem zweiten Satz konfiguriert ist, und kein Empfangen eines Signals von die Basisstation in den Unterrahmen, in denen das Benutzergerät mit einem Empfangsstatus konfiguriert ist.

5. Signalkommunikationsverfahren, umfassend:
Bestimmen (301) durch eine Basisstation eines ersten Satzes von Unterrahmen und eines zweiten Satzes von Unterrahmen in einem oder mehreren Funkrahmen; und
Kommunizieren (302) durch die Basisstation mit einem Benutzergerät, das sich in einer Zelle der Basisstation in dem ersten Satz von Unterrahmen befindet, und Kommunizieren mit einer anderen Einheit als dem Benutzergerät, die sich in der Zelle der Basisstation in dem zweiten Satz von Unterrahmen befindet,
wobei:
das Benutzergerät, das sich in der Zelle der Basisstation befindet, ein weiterentwickeltes TDD-Benutzergerät ist;
die Basisstation verschiedene Daten an das Benutzergerät, das sich in der Zelle der Basisstation befindet, und an die andere Einheit als dem Benutzergerät, die sich in der Zelle der Basisstation befindet, kommuniziert;
das Bestimmen (301) durch eine Basisstation eines ersten Satzes von Unterrahmen und eines zweiten Satzes von Unterrahmen in einem oder mehreren Funkrahmen, umfasst:
Bestimmen durch die Basisstation des ersten Satzes von Unterrahmen und des zweiten Satzes von Unterrahmen in einem oder mehreren Funkrahmen gemäß den empfangenen Konfigurationsinformationen von einer Netzwerkseite; oder
Bestimmen durch die Basisstation des ersten Satzes von Unterrahmen und des zweiten Satzes von Unterrahmen gemäß einer Dienstanforderung; Bestimmen durch die Basisstation einer Übertragungsrichtung des ersten Satzes von Unterrahmen gemäß einem Uplink-/Downlink-Konfigurationsanteil und Bestimmen einer Übertragungsrichtung des zweiten Satzes von Unterrahmen gemäß einem zu kommunizierenden Dienst; und Erzeugen durch die Basisstation von Konfigurationsinformationen aus dem bestimmten ersten Satz und zweiten Satz und Übertragen der Konfigurationsinformationen in einer spezifischen Systemmeldungs- oder Benutzergerätesignalisierung;
Konfigurieren durch die Basisstation eines nicht weiterentwickelten Benutzergeräts mit Uplink-Unterrahmen in dem bestimmten zweiten Satz von Unterrahmen oder Planen durch die Basisstation eines nicht weiterentwickelten Benutzergeräts zur Nichtübertragung eines Signals in dem zweiten Satz von Unterrahmen, wobei das nicht weiterentwickelte Benutzergerät ein Benutzergerät ist, das kein weiterentwickeltes TDD-Benutzergerät ist.

6. Verfahren nach Anspruch 5, wobei jeder Unterrahmen zu einem von dem ersten Satz und dem zweiten Satz gehört.

7. Verfahren nach Anspruch 5, wobei die Basisstation mit einer anderen Basisstation kommuniziert; und
die Basisstation, die mit der anderen Einheit als der in der Zelle der Basisstation befindlichen Benutzerausrüstung kommuniziert, umfasst:
Übertragen durch die Basisstation eines Signals an die andere Basisstation in den Unterrahmen, in denen die Basisstation mit einem Übertragungsstatus in dem zweiten Satz konfiguriert ist, und kein Übertragen eines Signals an das Benutzergerät in den Unterrahmen, in denen die Basisstation mit einem Übertragungsstatus konfiguriert ist; und
Empfangen eines Signals von der anderen Basisstation in den Unterrahmen, in denen die Basisstation mit einem Empfangsstatus in dem zweiten Satz konfiguriert ist, und kein Empfangen eines Signals von dem Benutzergerät in den Unterrahmen, in denen die Basisstation mit einem Empfangsstatus konfiguriert ist.

8. Verfahren nach Anspruch 5, wobei die Basisstation, die mit der in der Zelle der Basisstation befindlichen Benutzerausrüstung kommuniziert, umfasst:
Empfangen durch die Basisstation eines Signals in den Uplink-Unterrahmen in dem ersten Satz und Übertragen eines Signals in den Downlink-Unterrahmen in dem ersten Satz; und
die Basisstation, die mit der anderen Einheit als der in der Zelle der Basisstation befindlichen Benutzerausrüstung kommuniziert, umfasst:
Übertragen durch die Basisstation eines Signals in den Unterrahmen, in denen die Basisstation mit einem Übertragungsstatus in dem zweiten Satz konfiguriert ist, und Empfangen eines Signals in den Unterrahmen, in denen die Basisstation mit einem Empfangsstatus in dem zweiten Satz konfiguriert ist.

## Revendications

1. Procédé de communication de signal comprenant :
un équipement utilisateur déterminant (201) un premier ensemble de sous-trames et un second ensemble de sous-trames dans une ou plusieurs trames radio ; et
l'équipement utilisateur communiquant (202) avec une station de base d'une cellule de service dans le premier ensemble de sous-trames et communiquant avec une autre entité que la station de base de la cellule de service dans le deuxième ensemble de sous-trames,
l'équipement utilisateur étant un équipement utilisateur TDD évolué ;
l'équipement utilisateur communiquant des données différentes avec la station de base de la cellule de service et avec une entité autre que la station de base de la cellule de service ;
l'équipement utilisateur déterminant (201) le premier ensemble de sous-trames et le second ensemble de sous-trames dans une ou plusieurs trames radio comprenant :
l'équipement utilisateur déterminant des sous-trames de liaison montante et des sous-trames de liaison descendante dans le premier ensemble et déterminant des sous-trames dans lesquelles l'équipement utilisateur est configuré en état de transmission et des sous-trames dans lesquelles l'équipement utilisateur est configuré en état de réception dans le second ensemble selon des informations de configuration reçues d'un côté réseau ;
le deuxième ensemble déterminé de sous-trames étant configuré par la station de base de la cellule de service comme sous-trames de liaison montante pour un équipement utilisateur non évolué ; ou le deuxième ensemble de sous-trames étant configuré par la station de base de la cellule de service comme sous-trames dans lesquelles l'équipement utilisateur non évolué ne peut transmettre un signal, l'équipement utilisateur non évolué étant un équipement utilisateur qui n'est pas un équipement utilisateur TDD évolué.

2. Procédé selon la revendication 1, chaque sous-trame appartenant à l'un des premier et deuxième ensembles.

3. Procédé selon la revendication 1, l'équipement utilisateur communiquant avec la station de base comprenant :
l'équipement utilisateur transmettant un signal dans les sous-trames de la liaison montante dans le premier ensemble et recevant un signal dans les sous-trames de la liaison descendante dans le premier ensemble ; et
l'équipement utilisateur communiquant avec une entité autre que la station de base de la cellule de service comprenant :
l'équipement utilisateur transmettant un signal dans les sous-trames dans lesquelles l'équipement utilisateur est configuré en état de transmission dans le second ensemble et recevant un signal dans les sous-trames dans lesquelles l'équipement utilisateur est configuré en état de réception dans le second ensemble.

4. Procédé selon la revendication 3, l'équipement utilisateur communiquant avec un autre équipement utilisateur ; et
l'équipement utilisateur communiquant avec une entité autre que la station de base de la cellule de service comprenant :
l'équipement utilisateur transmettant un signal à l'autre équipement utilisateur dans les sous-trames dans lesquelles l'équipement utilisateur est configuré en état de transmission dans le second ensemble et ne transmettant pas un signal à la station de base dans les sous-trames dans lesquelles l'équipement utilisateur est configuré en état de transmission ; et recevant un signal de l'autre équipement utilisateur dans les sous-trames dans lesquelles l'équipement utilisateur est configuré en état de réception dans le second ensemble et ne recevant pas un signal de la station de base dans les sous-trames dans lesquelles l'équipement utilisateur est configuré en état de réception.

5. Procédé de communication de signal comprenant :
une station de base déterminant (301) un premier ensemble de sous-trames et un second ensemble de sous-trames dans une ou plusieurs trames radio ; et
la station de base communiquant (302) avec un équipement utilisateur résidant dans une cellule de la station de base dans le premier ensemble de sous-trames et communiquant avec une entité autre que l'équipement utilisateur résidant dans la cellule de la station de base dans le second ensemble de sous-trames,
l'équipement utilisateur résidant dans la cellule de la station de base étant un équipement utilisateur TDD évolué ;
la station de base communiquant différentes données avec l'équipement utilisateur résidant dans la cellule de la station de base et avec l'entité autre que l'équipement utilisateur résidant dans la station de base ;
la station de base déterminant (301) un premier ensemble de sous-trames et un second ensemble de sous-trames dans une ou plusieurs trames radio comprenant :
la station de base déterminant le premier ensemble de sous-trames et le second ensemble de sous-trames dans une ou plusieurs trames radio en fonction des informations de configuration reçues d'un côté réseau ; ou
la station de base déterminant le premier ensemble de sous-trames et le second ensemble de sous-trames en fonction d'une demande de service ; la station de base déterminant une direction de transmission du premier ensemble de sous-trames en fonction d'une proportion de configuration de liaison montante/liaison descendante, et déterminant une direction de transmission du second ensemble de sous-trames en fonction d'un service à communiquer ; et la station de base générant les informations de configuration des premier ensemble et second ensemble déterminés, et transmettant les informations de configuration en fonction d'une signalisation spécifique de système diffusé ou de matériel utilisateur ;
la station de base configurant un équipement utilisateur non évolué avec des sous-trames de liaison montante dans le deuxième ensemble déterminé de sous-trames, ou la station de base programmant un équipement utilisateur non évolué pour ne pas transmettre un signal dans le deuxième ensemble de sous-trames, l'équipement utilisateur non évolué étant un équipement utilisateur qui n'est pas un équipement utilisateur TDD évolué.

6. Procédé selon la revendication 5, chaque sous-trame appartenant à l'un des premier et deuxième ensembles.

7. Procédé selon la revendication 5, la station de base communiquant avec une autre station de base ; et
la station de base communiquant avec une autre entité que l'équipement utilisateur résidant dans la cellule de la station de base comprenant :
la station de base transmettant un signal à l'autre station de base dans les sous-trames dans lesquelles la station de base est configurée en état de transmission dans le second ensemble et ne transmettant pas un signal à l'équipement utilisateur dans les sous-trames dans lesquelles la station de base est configurée en état de transmission ; et recevant un signal de l'autre station de base dans les sous-trames dans lesquelles la station de base est configurée en état de réception dans le second ensemble et ne recevant pas un signal de l'équipement utilisateur dans les sous-trames dans lesquelles la station de base est configurée en état de réception.

8. Procédé selon la revendication 5, la station de base communiquant avec l'équipement utilisateur résidant dans la cellule de la station de base comprenant :
la station de base recevant un signal dans des sous-trames de liaison montante dans le premier ensemble et transmettant un signal dans des sous-trames de liaison descendante dans le premier ensemble ; et
la station de base communiquant avec une autre entité que l'équipement utilisateur résidant dans la cellule de la station de base comprenant :
la station de base transmettant un signal dans des sous-trames dans lesquelles la station de base est configurée en état de transmission dans le second ensemble et recevant un signal dans des sous-trames dans lesquelles la station de base est configurée en état de réception dans le second ensemble.
